# EUROPEAN PATENT APPLICATION

(11) **EP 4 525 345 A1**
(43) Date of publication of application: **19.03.2025**
(21) Application number: 24200484.4
(22) Date of filing: 16.09.2024
(51) Int. Cl.: H04L 9/00

(54) **FHE CHIP AND COMPUTING DEVICE**

(30) Priority: 15.09.2023 CN 202311197638
(71) Applicant: Alipay (Hangzhou) Information Technology Co., Ltd., Hangzhou, Zhejiang 310000 (CN)
(72) Inventor: TANG, Xin, Hangzhou, 310000 (CN); LI, Xiaodong, Hangzhou, 310000 (CN)
(74) Representative: Winter, Brandl - Partnerschaft mbB

(57) **Abstract**

Embodiments of this specification provide an FHE chip and a computing device. The FHE chip includes a MIN and n PEs, and n is an integer greater than 1. The n PEs are configured to execute n operation tasks that belong to a ciphertext operation in parallel in a process of performing the ciphertext operation on target ciphertext by the FHE chip, where the target ciphertext is obtained by processing raw data based on an FHE algorithm. The MIN is configured to support a first PE in transmitting switching data to a second PE, where the switching data belongs to an operation result generated by the first PE by executing the operation task, and the first PE and the second PE belong to the n PEs.

## Description

### TECHNICAL FIELD

One or more embodiments of this specification relate to the field of chip technologies, and in particular, to a fully homomorphic encryption (FHE) chip and a computing device.

### BACKGROUND

In a fully homomorphic encryption technology, computation (that is, a ciphertext operation) can be directly performed on encrypted data, and there is no need to decrypt the encrypted data into plaintext before computation is performed. Computational complexity is relatively high in a process of directly performing the ciphertext operation on the encrypted data, and a dedicated FHE chip usually needs to be provided to more quickly complete the ciphertext operation.

### SUMMARY

One or more embodiments of this specification provide an FHE chip and a computing device.

According to a first aspect, an FHE chip is provided. The FHE chip includes a multistage interconnection network (MIN) and n processor elements (PEs), and n is an integer greater than 1. The n PEs are configured to execute n operation tasks that belong to a ciphertext operation in parallel in a process of performing the ciphertext operation on target ciphertext by the FHE chip, where the target ciphertext is obtained by processing raw data based on an FHE algorithm. The MIN is configured to support a first PE in transmitting switching data to a second PE, where the switching data belongs to an operation result generated by the first PE by executing an operation task, and the first PE and the second PE belong to the n PEs.

In a possible implementation, the MIN includes m*n switching units classified into m stages, the n PEs are connected to n switching units belonging to a first stage in the MIN and are connected in a one-to-one correspondence to n switching units belonging to a second stage in the MIN, the first stage and the second stage are mutually a highest stage and a lowest stage in the m stages, and m is an integer greater than 1.

In a possible implementation, the MIN includes a Benes network.

In a possible implementation, the MIN includes at least one of the following networks: an Omega network, a baseline network, and a butterfly network.

In a possible implementation, each of the n PEs includes at least two output ports and at least two input ports; and the MIN is configured to: receive a first data packet from a first output port in the first PE, where the first data packet includes the switching data and a first input address of a first input port that is in the second PE and that is to be used to receive the first data packet; and transmit the first data packet to the first input port based on the first input address.

In a possible implementation, the first data packet further includes a first output address of the first output port; and the MIN is specifically configured to transmit the first data packet to the first input port based on the first output address and the first input address.

In a possible implementation, the PE includes a butterfly unit (BFU) configured to execute a number-theoretic transform (NTT) operation task.

In a possible implementation, the PE includes an automorphism address generation unit (Auto AGU) configured to execute an automorphism operation task.

In a possible implementation, the PE includes an arithmetic and logic unit (ALU) configured to execute an arithmetic operation task and/or a logic operation task.

According to a second aspect, a computing device is provided, and includes the FHE chip according to any implementation of the first aspect.

According to the technical solution provided in the one or more embodiments of this specification, in the process of performing the ciphertext operation on the target ciphertext by the FHE chip, the n PEs included in the FHE chip can execute a plurality of operation tasks that belong to the ciphertext operation in parallel. An operation result generated by a single PE by performing the operation task may include switching data that needs to be transmitted to a specific PE based on predetermined logic, and a transmission mode of the switching data is point-to-point data transmission between PEs. Therefore, the MIN is used in the FHE chip to transmit the switching data. The MIN has a relatively small implementation area in the FHE chip, and can well support point-to-point transmission of the switching data between the PEs. This can improve overall performance of the FHE chip without additional bandwidth and an additional access delay.

### BRIEF DESCRIPTION OF DRAWINGS

To describe the technical solutions in the embodiments of this specification more clearly, the following briefly describes the accompanying drawings needed for describing the embodiments. Clearly, the accompanying drawings in the following description show merely some embodiments of this specification, and a person of ordinary skill in the art can derive other drawings from these accompanying drawings without creative efforts.
FIG. 1 is a schematic structural diagram of an FHE chip according to an embodiment of this specification;
FIG. 2 is a schematic structural diagram of a PE in an FHE chip according to an embodiment of this specification;
FIG. 3 is a schematic diagram of a topology relationship between an Omega network and eight PEs according to an example;
FIG. 4 is a schematic diagram of a connection relationship between an input port and an output port in a switching unit included in a MIN; and
FIG. 5 is a schematic structural diagram of a computing device according to an embodiment of the present specification.

### DESCRIPTION OF EMBODIMENTS

The non-limiting embodiments provided in this specification are described below in detail with reference to the accompanying drawings.

With popularization of data security and development of privacy computing services, an FHE algorithm has extensive development space and application scenarios. Currently, a plurality of FHE algorithms are widely applied, for example, a typical CKKS algorithm, a BGV algorithm, and a BFV algorithm. The CKKS algorithm is used as an example. Ciphertext operations supported by the CKKS algorithm include but are not limited to operations such as addition, subtraction, multiplication, SUM, AVG, EXP, POW, LOG, LOG2, LOG10, SQRT, and ABS.

Target ciphertext obtained by processing raw data based on the FHE algorithm is usually presented in a form of a large-coefficient polynomial, and a quantity of points of the large-coefficient polynomial usually ranges from 1024 to 65536. A process of performing a ciphertext operation on the target ciphertext is a process of performing a related operation on the large-coefficient polynomial. In view of relatively high computational complexity in the process of performing the related operation on the large-coefficient polynomial, a dedicated FHE chip usually needs to be used to accelerate completion of the related operation.

In the FHE chip, the ciphertext operation can be decomposed into a large quantity of operation tasks. For some operation tasks that are allowed to be executed in parallel, the some operation tasks are executed in parallel by using n PEs (n being greater than 1) in the FHE chip, to accelerate the completion of the ciphertext operation. In an example in which a multiplication operation is performed on the target ciphertext, the n PEs need to complete massive NTT operation tasks and automorphism operation tasks on the large-coefficient polynomial whose quantity of points may range from 1024 to 65536. For a single operation task specifically executed by a certain PE, the PE usually needs to select two coefficients of the large-coefficient polynomial according to a certain rule to participate in the operation.

There is a strong data correlation between coefficients of the large-coefficient polynomial. An operation result generated by a certain PE in the FHE chip by performing a certain operation task that belongs to the ciphertext operation may include switching data that needs to be transmitted to a specific PE based on predetermined logic. Therefore, a network on chip (NoC) that meets high bandwidth and a low delay needs to be deployed between the n PEs in the FHE chip, to support transmitting the switching data between the n PEs as needed.

In the FHE chip, a crossbar, a 1d ring, or a 2d mesh network is usually used as the NoC that is used to support transmitting the switching data between the n PEs as needed. The above-mentioned various NoCs can well meet acceleration needs of the ciphertext operation in terms of a data path, bandwidth, and a delay. However, a large quantity of chip resources need to be consumed, which negatively affects performance of the FHE chip.

The inventor finds, through research, that the switching data that needs to be switched in the FHE chip is essentially transmitted through point-to-point transmission between PEs, that is, a single piece of switching data is usually not transmitted to a plurality of PEs. The NoC including the crossbar implements any data transmission between PEs, and a large quantity of resources in data paths included in the NoC are wasted. For example, in the FHE chip that includes the n PEs, there are not less than n*n data paths in an actually deployed crossbar. However, in the FHE chip, because the switching data is essentially transmitted through point-to-point transmission between PEs, a large quantity of data paths in the data paths not less than n*n are not truly used to transmit the switching data, that is, a large quantity of data paths are not enabled.

Based on the above-mentioned findings, the embodiments of this specification provide at least an FHE chip and a computing device. In a process of performing a ciphertext operation on target ciphertext by the FHE chip, n PEs included in the FHE chip can execute a plurality of operation tasks that belong to the ciphertext operation in parallel. An operation result generated by a single PE by performing the operation task may include switching data that needs to be transmitted to a specific PE based on predetermined logic, and a transmission mode of the switching data is point-to-point data transmission between PEs. Therefore, a MIN is used in the FHE chip to transmit the switching data. The MIN has a relatively small implementation area in the FHE, and can well support point-to-point transmission of the switching data between the PEs. This can improve overall performance of the FHE chip without additional bandwidth and an additional access delay.

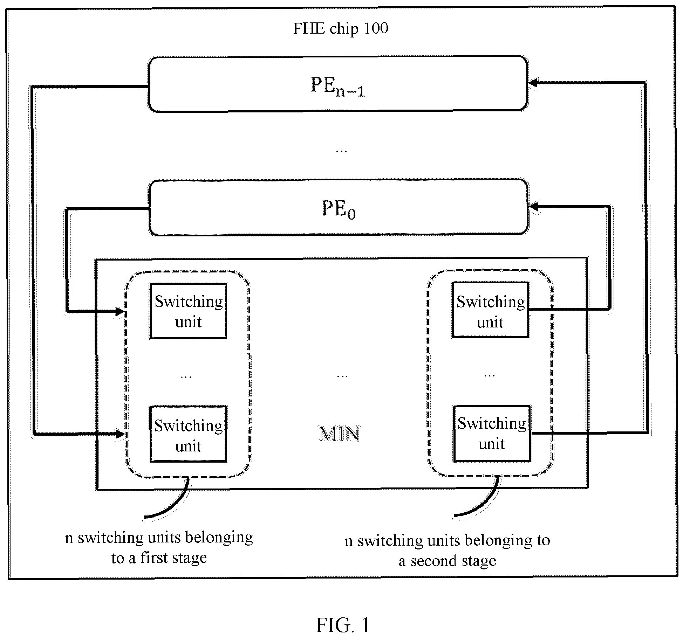

FIG. 1 is a schematic structural diagram of an FHE chip according to an embodiment of this specification. As shown in FIG. 1, the FHE chip 100 includes a MIN and n PEs such as PE₀ to PEₙ₋₁. The n PEs are configured to execute n operation tasks that belong to a ciphertext operation in parallel in a process of performing the ciphertext operation on target ciphertext by the FHE chip 100, where the target ciphertext is obtained by processing raw data based on an FHE algorithm. The MIN is configured to support a first PE in transmitting switching data to a second PE, where the switching data belongs to an operation result generated by the first PE by executing the operation task, and the first PE and the second PE belong to the n PEs.

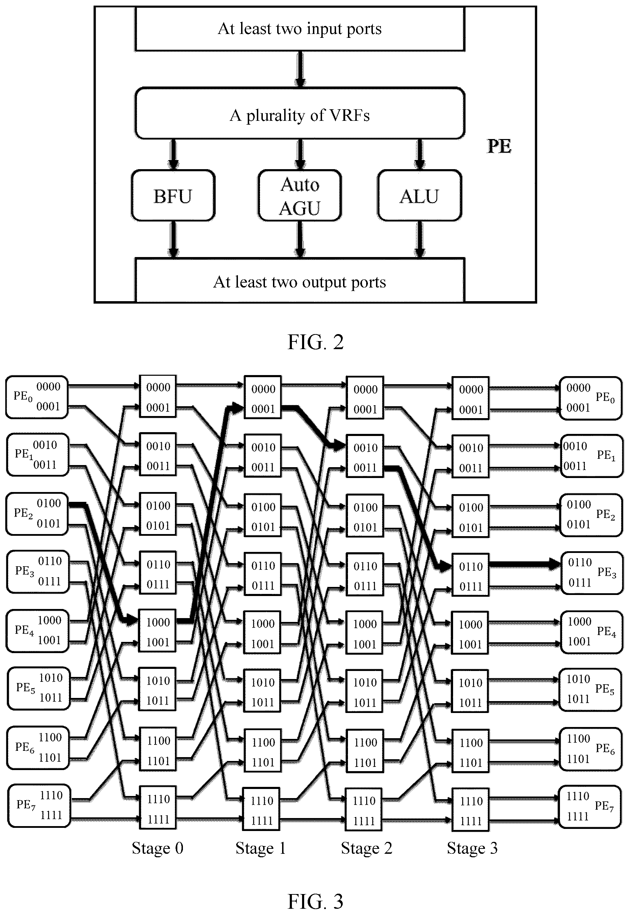

The operation task can be an NTT operation task, an automorphism operation task, an arithmetic operation task, or a logic operation task. Correspondingly, as shown in FIG. 2, a single PE can include one or more of the following functional units: a BFU configured to execute the NTT operation task, an Auto AGU configured to execute the automorphism operation task, and an ALU configured to execute the arithmetic operation task and/or the logic operation task. The NTT operation task can be subdivided into a plurality of types of operation sub-tasks, for example, a bit reverse operation task and a butterfly operation, that is, the BFU in the PE can be specifically configured to execute the bit reverse operation task, the butterfly operation task, and the like that belong to the ciphertext operation.

As still shown in FIG. 2, a plurality of vector register files (VRFs) can be configured in the single PE. For example, 32 VRFs usually can be configured, and functional units such as the BFU, the Auto AGU, and the ALU can reuse the plurality of VRFs in the PE. For example, the functional units such as the BFU, the Auto AGU, and the ALU can select two coefficients of a large-coefficient polynomial as needed from the plurality of VRFs according to a certain rule to participate in execution of a related operation task.

For an operation result generated by any PE by executing the operation task that belongs to the ciphertext operation, the operation result usually includes two pieces of switching data corresponding to the two coefficients, and the two pieces of switching data may correspond to two coefficients of a new large-coefficient polynomial. Each piece of switching data may need to be transmitted to a specific PE based on predetermined logic. For example, when executing a certain NTT operation task that belongs to the ciphertext operation, a BFU in a certain PE may select two coefficients *aᵢ* and *aⱼ* of a large-coefficient polynomial from one VRF in the PE, select a parameter w from another VRF, and use *aᵢ*, *aⱼ,* and the parameter w to participate in execution of the NTT operation task. An obtained operation result includes switching data *Aᵢ* corresponding to the coefficient *aᵢ* and switching data *Aⱼ* corresponding to the coefficient *aⱼ*, and the switching data *Aᵢ* and the switching data *Aⱼ* may need to be transmitted to a specific PE based on the predetermined logic.

As described above, in the operation result generated by the PE by executing the operation task, the switching data *Aᵢ* and the switching data *Aⱼ* may need to be transmitted to the specific PE based on the predetermined logic. To ensure that the switching data *Aᵢ* and the switching data *Aⱼ* can be transmitted to the specific PE based on the predetermined logic, referring to FIG. 2, the single PE can include at least two output ports and at least two input ports, and two output ports and two input ports are configured to be connected to the MIN.

In 2n output ports that are included in the n PEs in the FHE chip and that are configured to be connected to the MIN, different output ports have different output addresses, and output addresses usually can be allocated to the 2n output ports starting from 0 based on an arrangement sequence of the n PEs. Similarly, in 2n input ports that are included in the n PEs in the FHE chip and that are configured to be connected to the MIN, different input ports have different input addresses, and input addresses usually can be allocated to the 2n input ports starting from 0 based on the arrangement sequence of the n PEs.

Correspondingly, the predetermined logic can specify a corresponding output port and an input port for the to-be-transmitted switching data, so that the PE correspondingly outputs the switching data from the specified output port to the MIN based on an output address of the specified output port, and the MIN transmits the switching data to the specified input port based on an input address of the specified input port.

The MIN can include a Benes network. For various operation tasks such as the NTT operation task, the automorphism operation task, the logic operation task, and the arithmetic operation task, the Benes network can better meet a need of transmitting the switching data between the n PEs as needed in a process of executing the operation tasks in parallel by the n PEs.

The MIN can include an Omega network. For various operation tasks such as the automorphism operation task, the logic operation task, and the arithmetic operation task, the Omega network can better meet a need of transmitting the switching data between the n PEs as needed in a process of executing the operation tasks in parallel by the n PEs.

The MIN can include a baseline network. For the bit reverse operation task that belongs to the ciphertext operation, the baseline network can better meet a need of transmitting the switching data between the n PEs as needed in a process of executing the operation tasks in parallel by the n PEs.

The MIN can include a butterfly network. For the butterfly operation task that belongs to the ciphertext operation, the butterfly network can better meet a need of transmitting the switching data between the n PEs as needed in a process of executing the operation tasks in parallel by the n PEs.

In a possible implementation, the MIN can alternatively include at least two of an Omega network, a baseline network, and a butterfly network, so that the MIN in the FHE chip can better support transmitting the switching data between the n PEs as needed in a process of executing various operation tasks that belong to the ciphertext operation in parallel by the n PEs.

When the MIN does not include a plurality of networks, the MIN can include n*m switching units classified into m stages such as a stage 0 to a stage m-1. For any stage in the m stages, n switching units belong to the stage in the MIN. Depending on a type of the MIN, the quantity m of stages may be different. When a value of the quantity n of PEs in the FHE chip is 2^{*k*-1}, a value of m is k for the Omega network, the baseline network, the butterfly network, and another type of network; and the value of m is 2k-1 for the Benes network.

Two input ports belonging to a same PE are connected to a same switching unit belonging to a second stage in the MIN, and input ports belonging to different PE are connected to different switching units belonging to the second stage in the MIN. Depending on the type of the MIN, two output ports belonging to a same PE may be connected to a same switching unit belonging to a first stage in the MIN, or may be connected to different switching units belonging to a first stage in the MIN. For example, when the MIN includes the baseline network, the butterfly network, or the Benes network, the two output ports belonging to the same PE need to be connected to the same switching unit belonging to the first stage in the MIN; or when the MIN includes the Omega network, the two output ports belonging to the same PE need to be connected to different switching units belonging to the first stage in the MIN. It should be noted that the first stage and the second stage are mutually a highest stage and a lowest stage in the m stages, that is, the first stage is 0 and the second stage is m-1, or the first stage is m-1 and the second stage is 0.

In the MIN, the switching data can be routed based on a destination address. The destination address is an input address of an input port to be used to receive the switching data. The MIN can receive a first data packet from a first output port in the first PE, where the first data packet includes the switching data and a first input address of a first input port that is in the second PE and that is to be used to receive the first data packet. Correspondingly, the MIN can transmit the first data packet to the first input port in the second PE based on the first input address.

In the MIN, the switching data can be routed based on a connection relationship. The connection relationship refers to an output address of an output port that sends the switching data and an input address of an input port to be used to receive the switching data. The MIN can receive a first data packet from a first output port in the first PE, where the first data packet includes the switching data, a first output address of the first output port, and a first input address of a first input port that is in the second PE and that is to be used to receive the first data packet. Correspondingly, the MIN can transmit the first data packet to the first input port based on the first output address and the first input address.

The following uses an example in which the MIN in the FHE chip is the Omega network, the n PEs connected by using the Omega network specifically include eight PEs such as PE₀ to PE₇, and a single PE includes two output ports and two input ports that are configured to be connected to the MIN. There may be the following topology relationship shown in FIG. 3 between the Omega network and the eight PEs such as PE₀ to PE₇.

In the FHE chip, 16 output ports in the eight PEs can be numbered by using a bit sequence whose length is 4, that is, respective output addresses of the 16 output ports are represented by using the bit sequence whose length is 4. Similarly, respective input addresses of 16 input ports in the eight PEs can be represented by using a bit sequence whose length is 4. Similarly, respective input addresses of 16 input ports in eight switching units belonging to a same stage can be represented by using a bit sequence whose length is 4, and respective output addresses of 16 output ports in the eight switching units belonging to the same stage can be represented by using a bit sequence whose length is 4.

The switching unit can be a functional switching unit that includes two input ports and two output ports. In the following, in two input ports included in a same switching unit, an input port with a higher input address is described as a high-address input port, and an input port with a lower input address is described as a low-address input port. Similarly, an output port with a higher output address is described as a high-address output port, and an output port with a lower output address is described as a low-address output port. The switching unit includes two working modes. The two working modes are denoted herein as pass-through and crossover.

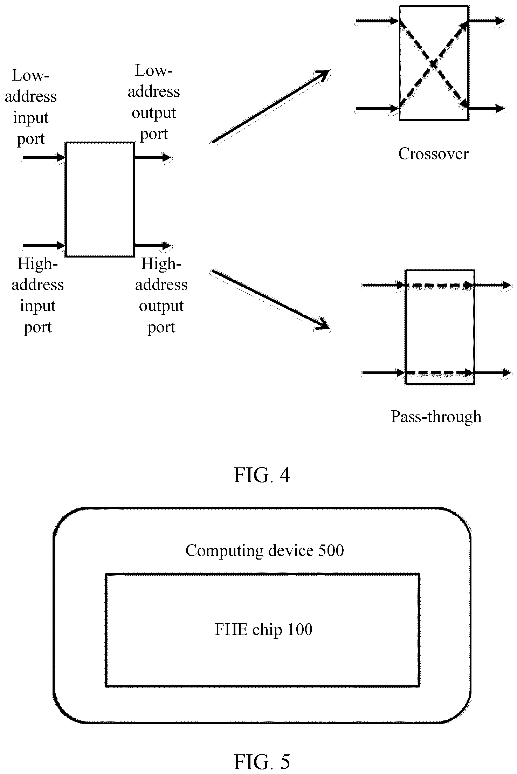

As shown in FIG. 4, when the working mode of the switching unit is pass-through, the high-address input port and the high-address output port are connected, and the low-address input port and the low-address output port are connected. In this case, switching data entering the switching unit through the high-address input port is output from the high-address output port in the switching unit; and switching data entering the switching unit through the low-address input port is output from the low-address output port in the switching unit.

When the working mode of the switching unit is crossover, the high-address input port and the low-address output port are connected, and the low-address input port and the high-address output port are connected. In this case, switching data entering the switching unit through the high-address input port is output from the low-address output port in the switching unit; and switching data entering the switching unit through the low-address input port is output from the high-address output port in the switching unit.

If an output address corresponding to an output port specified for to-be-transmitted switching data in a certain PE based on the predetermined logic is a bit sequence s₃s₂s₁s₀, and an input address corresponding to a specified input port is a bit sequence d₃d₂d₁d₀, the switching unit in the MIN can route and transmit the switching data only based on the bit sequence d₃d₂d₁d₀, or can route and transmit the switching data based on the bit sequence s₃s₂s₁s₀ and the bit sequence d₃d₂d₁d₀.

When the MIN routes and transmits the switching data based on the destination address, that is, the switching unit in the MIN routes and transmits the switching data only based on the bit sequence d₃d₂d₁d₀, a switching unit belonging to any stage q can determine an output port based on a length of the bit sequence. For example, when the length of the bit sequence is 4, the switching unit can determine the output port based on d_{4-1-q} in the bit sequence d₃d₂d₁d₀, that is, select a (4-q)^{th} bit from the bit sequence d₃d₂d₁d₀ in ascending order to determine the output port. Specifically, when a value of the (4-q)^{th} bit is 0, the switching data is output from a low-address output port; or when a value of the (4-q)^{th} bit is 1, the switching data is output from a high-address output port. In this way, a switching unit belonging to the stage 0 needs to determine an output port by using d₃ in the bit sequence d₃d₂d₁d₀, a switching unit belonging to the stage 1 needs to determine an output port by using d₂ in the bit sequence d₃d₂d₁d₀, a switching unit belonging to the stage 2 needs to determine an output port by using d₁ in the bit sequence d₃d₂d₁d₀, and a switching unit belonging to the stage 3 needs to determine an output port by using d₀ in the bit sequence d₃d₂d₁d₀. More specifically, when a value of d_{4-1-q} is 0, the switching unit can select a working mode from pass-through and crossover, to ensure that the switching data is output from the low-address output port; or when a value of d_{4-1-q} is 1, the switching unit can select a working mode from pass-through and crossover, to ensure that the switching data is output from the high-address output port.

For example, an operation result generated by PE₂ by executing the operation task that belongs to the ciphertext operation includes the switching data *Aᵢ*, an output address corresponding to an output port specified for the switching data *Aᵢ* based on the predetermined logic in PE₂ is 0100, and an input address corresponding to an input port specified for the switching data *Aᵢ* based on the predetermined logic in PE₂ is 0110. As shown in FIG. 3, the switching unit belonging to the stage 0 selects a fourth bit in 0100 to determine a working mode. Because the fourth bit is 0, the switching unit belonging to the stage 0 outputs the switching data *Aᵢ* from a low-address output port in the switching unit. Based on a similar principle, the switching unit belonging to the stage 1 outputs the switching data *Aᵢ* from a high-address output port in the switching unit, the switching unit belonging to the stage 2 outputs the switching data *Aᵢ* from a high-address output port in the switching unit, and the switching unit belonging to the stage 3 outputs the switching data *Aᵢ* from a low-address output port in the switching unit, so that the switching data *Aᵢ* arrives from the input port whose input address is 0110 to PE₃.

When the MIN routes and transmits the switching data based on the connection relationship, that is, the switching unit in the MIN routes and transmits the switching data based on the bit sequence s₃s₂s₁s₀ and the bit sequence d₃d₂d₁d₀, a target bit sequence can be computed in same space by using x = *s^{d},* where s is a value of the bit sequence s₃s₂s₁s₀, d is a value of the bit sequence d₃d₂d₁d₀, and x is a value of the target bit sequence. Herein, the target bit sequence is denoted as x₃x₂x₁x₀. A switching unit belonging to any stage q can determine a working mode based on a length of the bit sequence. For example, when the length of the bit sequence is 4, the switching unit can determine an output port based on x_{4-1-q} in the bit sequence x₃x₂x₁x₀, that is, select a (4-q)^{th} bit from the bit sequence x₃x₂x₁x₀ in ascending order to determine the working mode. Specifically, when a value of the (4-q)^{th} bit is 0, pass-through is selected as the working mode; or when a value of the (4-q)^{th} bit is 1, crossover is selected as the working mode. In this way, a switching unit belonging to the stage 0 needs to determine a working mode by using x₃ in the bit sequence x₃x₂x₁x₀, a switching unit belonging to the stage 1 needs to determine a working mode by using x₂ in the bit sequence x₃x₂x₁x₀, a switching unit belonging to the stage 2 needs to determine a working mode by using x₁ in the bit sequence x₃x₂x₁x₀, and a switching unit belonging to the stage 3 needs to determine a working mode by using x₀ in the bit sequence x₃x₂x₁x₀.

The process of transmitting the switching data by the MIN described above is merely an example. A quantity of PEs in an actual technical scenario can be selected as needed. The MIN can complete point-to-point transmission of the switching data between PEs by using a process similar to the above-mentioned process.

Based on a same concept, an embodiment of this specification further provides a computing device 500, including the FHE chip 100 described in any embodiment of this specification. When the computing device 500 needs to perform a ciphertext operation on target ciphertext obtained by processing raw data based on an FHE algorithm, the FHE chip 100 can be used to accelerate the ciphertext operation.

The computing device 500 can further include a processor, a communications interface, a memory, and a communications bus. The FHE chip 100, the processor, the communications interface, and the memory communicate with each other by using the communications bus.

The communications interface is configured to communicate with another electronic device or a server.

The processor is configured to execute a program to implement predetermined transactions and communicate with the FHE chip by using the communications bus.

The processor can be a CPU or an application-specific integrated circuit (ASIC).

The memory is configured to store a program. The memory can include a high-speed RAM memory, or can include a nonvolatile memory, for example, at least one disk memory.

The program can be specifically used to enable the processor to execute predetermined transactions and communicate with the FHE chip by using the communications bus.

The embodiments of this specification are described in a progressive manner. For same or similar parts of the embodiments, mutual references can be made to the embodiments. Each embodiment focuses on a difference from other embodiments.

Specific embodiments of this specification are described above. Other embodiments fall within the scope of the appended claims. In some cases, the actions or steps described in the claims can be performed in a sequence different from that in the embodiments and desired results can still be achieved.

It should be understood that the above-mentioned descriptions are merely specific implementations of this specification, but are not intended to limit the protection scope of this specification. Any modification, equivalent replacement, improvement, and the like made based on the technical solutions of this specification shall fall within the protection scope of this specification.

## Claims

1. A fully homomorphic encryption (FHE) chip, wherein the FHE chip comprises a multistage interconnection network (MIN) and n processor elements (PEs), and n is an integer greater than 1;
the n PEs are configured to execute n operation tasks that belong to a ciphertext operation in parallel in a process of performing the ciphertext operation on target ciphertext by the FHE chip, wherein the target ciphertext is obtained by processing raw data based on an FHE algorithm; and
the MIN is configured to support a first PE in transmitting switching data to a second PE, wherein the switching data belongs to an operation result generated by the first PE by executing an operation task, and the first PE and the second PE belong to the n PEs.

2. The FHE chip according to claim 1, wherein the MIN comprises m*n switching units classified into m stages, the n PEs are connected to n switching units belonging to a first stage in the MIN, and are connected in a one-to-one correspondence to n switching units belonging to a second stage in the MIN, the first stage and the second stage are mutually a highest stage and a lowest stage in the m stages, and m is an integer greater than 1.

3. The FHE chip according to claim 1 or 2, wherein the MIN comprises a Benes network.

4. The FHE chip according to any one of claims 1 to 3, wherein the MIN comprises at least one of the following networks: an Omega network, a baseline network, and a butterfly network.

5. The FHE chip according to any one of claims 1 to 4, wherein each of the n PEs comprises at least two output ports and at least two input ports; and the MIN is configured to: receive a first data packet from a first output port in the first PE, wherein the first data packet comprises the switching data and a first input address of a first input port that is in the second PE and that is to be used to receive the first data packet; and transmit the first data packet to the first input port based on the first input address.

6. The FHE chip according to claim 5, wherein the first data packet further comprises a first output address of the first output port; and the MIN is specifically configured to transmit the first data packet to the first input port based on the first output address and the first input address.

7. The FHE chip according to any one of claims 1 to 6, wherein the PE comprises a butterfly unit (BFU) configured to execute a number-theoretic transform (NTT) operation task.

8. The FHE chip according to any one of claims 1 to 6, wherein the PE comprises an automorphism address generation unit (Auto AGU) configured to execute an automorphism operation task.

9. The FHE chip according to any one of claims 1 to 6, wherein the PE comprises an arithmetic and logic unit (ALU) configured to execute an arithmetic operation task and/or a logic operation task.

10. A computing device, comprising the FHE chip according to any one of claims 1 to 9.
